# EUROPEAN PATENT APPLICATION

(11) **EP 2 193 992 A2**
(43) Date of publication of application: **09.06.2010**
(21) Application number: 09252585.6
(22) Date of filing: 10.11.2009
(51) Int. Cl.: B64C 3/38, B64C 3/40, B64C 39/02, B64C 39/06, B64D 27/02

(54) **Air vehicle**

(30) Priority: 04.12.2008 GB 0822175
(71) Applicant: Thales Holdings UK Plc, Addlestone, Near Weybridge, Surrey KT15 2NX (GB)
(72) Inventor: Gleed, Gerald, Crawley, Surrey RH10 2 RL (GB); Alders, Dean, Crawley, Surrey RH10 2 RL (GB)
(74) Representative: Maury, Richard Philip

(57) **Abstract**

An air vehicle comprising only one wing, which is thin and substantially flat, the wing being elongate and preferably diamond-shaped, and a pod removably coupled to the wing for relative rotation about an axis normal to the major surfaces of the wing, the pod bearing a propulsor for the air vehicle. The propulsor may be a propeller with a Custer duct for static lift.

## Description

This invention relates to an air vehicle and is particularly, although not exclusively, useful for unmanned air vehicles, and for air vehicles where large differences between loiter and dash speed is perceived as a useful feature, and also where launch or takeoff has to be in confined spaces.

The present invention provides an air vehicle comprising only one wing, which is thin and substantially flat, the wing being rotationally asymmetric about an axis at its centre normal to its major surfaces, and a pod removably coupled to the wing for relative rotation about an axis normal to the major surfaces of the wing, the pod bearing a propulsor for the air vehicle.

The fact that the pod is removable from the wing allows the system to be modular, and, for example, allows different types of pod to be used in the same wing according to the functional requirements of the air vehicle, for example its maximum speed or its pay load.

Preferably, the wing is elongate and the air vehicle is configured to align the wing selectively either widthwise or lengthwise to the direction of thrust of the propulsor, for stable flight respectively at relatively slow and fast speeds.

The invention also provides an air vehicle comprising only one wing, which is thin and substantially flat, at least one propeller coupled to the wing to drive the air vehicle in a direction generally parallel to the major surfaces of the wing, and a Custer duct in front of the propeller or of each propeller for providing static lift.

Custer lift is a well-known phenomenon, in which aerodynamic static lift is provided from the passage of air drawn along a duct and into a propeller, an upper portion of the duct being open upwardly. Custer lift was discovered by Willard Custer, and the first flight of an aircraft using this principle, the CCW-1, or Custer Channel Wing No 1, was in 1942. The Custer lift phenomenon is described in "Power-on Channel Wing Aerodynamics" by Edward Blick and Vincent Homer, reprinted from the Journal of Aircraft. Further disclosure is found in:

| **Publication** | **Date** |
|---|---|
| NACA Research Memorandum RM L53A09 | 1954 |
| Army Air Force Technical Report 5143 | 1944 |
| Army Air Force Technical Report 5568 | 1947 |
| P-20 series STOL aircraft brochure | - |
| The Aeroplane and Commercial Aviation News magazine | July 30, 1964 |
| Air Power magazine *Volume 7 No. 3* | May, 1977 |
| Air Progress magazine | October/November, 1964 |
| Air Trails Pictorial magazine | June, 1948 |
| Aviation Week magazine | September 28, 1959 |
| Daily Mail newspaper, Hagerstown, Maryland | April 25, 1947 |
| Daily Mail newspaper, Hagerstown, Maryland | August 22, 1978 |
| Flying magazine | April, 1965 |
| Journal of the American Aviation Historical Society | Spring, 1998 |
| Morning Herald newspaper, Hagerstown, Maryland | May 11, 1978 |
| Navy magazine | November, 1959 |
| Popular Mechanics magazine | May, 1947 |
| Popular Mechanics magazine | September, 1964 |

The invention also provides an air vehicle comprising only one, elongate wing, which is thin and substantially flat, a pod mounted on the wing for rotation through a right angle between configurations for propulsion respectively lengthwise and widthwise of the wing, the pod bearing a propulsor for the air vehicle and the wing having plural control surfaces on its edge actuable by respective actuators, and a control system configured to activate the control surfaces selectively in accordance with the relative rotational positions of the wing and pod.

Further, the invention provides an air vehicle having a propeller for driving the vehicle forwards, a Custer duct in front of the propeller, and shutter means for adjustably closing an axially-extending region over the Custer duct to selectively reduce the static aerodynamic lift that it generates from the passage of air drawn in by the propeller.

The invention also provides a propulsor pod for an air vehicle, comprising a propulsor and a turntable configured to couple the pod removably to a wing of the air vehicle for relative rotation.

Further, the invention provides a thin, elongate, substantially flat wing for an air vehicle, comprising a turntable on which a propulsor pod is removably mountable for relative rotation.

In order that the invention may be better understood, preferred embodiments of the invention will now be described, by way of example only, with reference to the accompanying schematic drawings, in which:
Figures 1 and 2 are perspective views from above of an unmanned air vehicle embodying the invention configured respectively for fast flight and for slow flight, i.e. for dash and for loiter respectively;
Figure 3 is a cross-sectional view through an unmanned air vehicle embodying the invention;
Figures 4 and 5 are perspective views from above and below of an unmanned vehicle embodying the invention and having Custer ducts;
Figures 6 and 7 are cross-sectional views through a portion of the propulsor of an air vehicle embodying the present invention, illustrating alternative forms of door for selectively closing the Custer duct;
Figures 8 and 9 are perspective views from above of an unmanned air vehicle embodying the present invention and having twin propellers with Custer ducts, showing the ducts respectively open and closed;
Figures 10 and 11 are diagrams showing the effect of a thrust spoiler and a thrust reverser, respectively, on an air vehicle embodying the present invention;
Figure 12 is a diagram illustrating the centre of aerodynamic lift of the wing of an unmanned air vehicle embodying the present invention;
Figures 13 to 16 are diagrams of an unmanned air vehicle embodying the present invention and showing alternative arrangements for rotating a propulsor relative to the wing;
Figures 17 and 18 are cross-sectional views through an unmanned air vehicle embodying the present invention and illustrating alternative configurations of a turntable; and
Figures 19, 20 and 21 are cross-sectional views through unmanned air vehicles embodying the present invention and having additional centre bodies or pods.

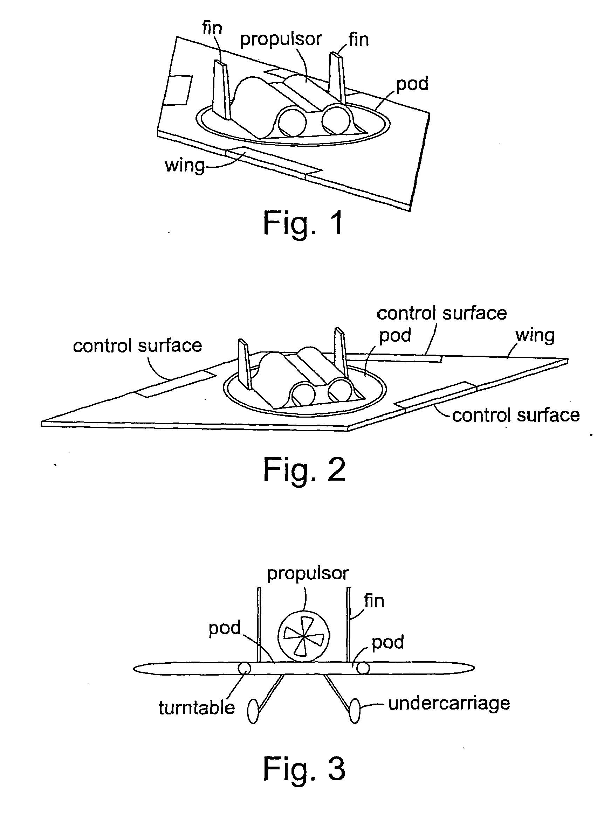

A first embodiment of the invention is illustrated in Figures 1 and 2, and comprises a diamond-shaped wing with control surfaces on three of its edges, to which it is coupled rotationally through a turntable to a circular pod or centre body. The pod has a pair of fins directed vertically from opposed sides of the pod, to stabilise the motion of the pod in flight. In this example, the pod bears a propulsor which comprises two counter-rotating propellers in respective ducts. The pod can be made to rotate through a right-angle between the configuration shown in Figure 1 for fast flight, and the configuration shown in Figure 2 for slow flight or loitering. For fast flight, the thrust is directed lengthwise of the wing, whereas for slow flight the thrust is directed widthwise.

The wing is generally flat and is thin relative to its width. In the example shown in Figures 1 and 2, the wing is essentially planar. The ratio of length to width of the diamond-shaped wing is preferably at least 2: 1, and its dimensions are scaleable. The wing thickness is preferably 3% to 5% of its length.

The wing is controlled by the three control surfaces shown, although in other examples extra control surfaces could be provided. The aerodynamic surfaces are at its trailing edges, so they function as elevons. In order to make the transition between the Figure 1 and Figure 2 configurations for fast and slow flight, it is necessary for the control surfaces to change their function. Transition logic for controlling the control surfaces is part of a flight management system which is implemented in software which may reside either in the pod or in a remote control station which communicates with the air vehicle by radio for example. As the wing rotates relative to the pod in flight, the relevant deflections of the control surfaces are performed automatically, using actuators (not shown) which may be powered through an electrical cable (not shown) removably coupled between the pod and the wing. Additional aerodynamic control is achievable using air brakes (not shown) on the wing or on the pod. Sensors (not shown) sense the position of the pod relative to the wing, and the position of each control surface, and feed data signals to the flight control system.

In this example, the range of rotation between its principal configurations is a right-angle or 90°, but in alternative embodiments this may be a different angle, which may be an acute angle or an obtuse angle. Also, it is not necessary for the wing to be diamond-shaped: alternative rotationally asymmetric shapes are feasible. The more elongate the wing, the greater the difference in speed between its two configurations. The edge of the wing need not be polygonal and need not have a regular shape. The wing could for example be oval, or could have a mixture of straight edges and arcuate edges.

Rotation of the wing relative to the pod may be performed either on the ground or when the vehicle is air borne, this choice being made according to the constraints applicable to launch or takeoff. The vehicle may be launched for, example, from the deck of a ship or from the roof of a building, using an elastic cord or an alternative propulsion system based on the ground. Alternatively, the air vehicle itself may provide sufficient vertical thrust for takeoff.

An advantage of the present invention is that the air vehicle may be modular, by virtue of the removability of the pod from the wing. This achieves maximum independence of the wing from the pod, to facilitate their transport, storage and maintenance, and their adaptation to fit different roles. Different pods, compatible with the same wing, may be manufactured or may be configured, and stored in specific configurations, to suit different operational requirements, such as maximum speed or maximum weight of pay load.

Preferably, the pod houses the propulsion systems, flight control systems, electrical generation systems, communication systems, fuel, fins and undercarriage. A schematic representation of the undercarriage is shown in Figure 3. In the example shown in Figure 3, a pod is coupled over the wing by means of a turntable at the centre of the wing.

The relative sizes of the wing and pod shown in the example of Figure 3 may suit a vehicle required for maximum manoeuvrability in flight. In an alternative configuration, the wing is elongated further, to provide longer range for a given amount of fuel stored in the pod.

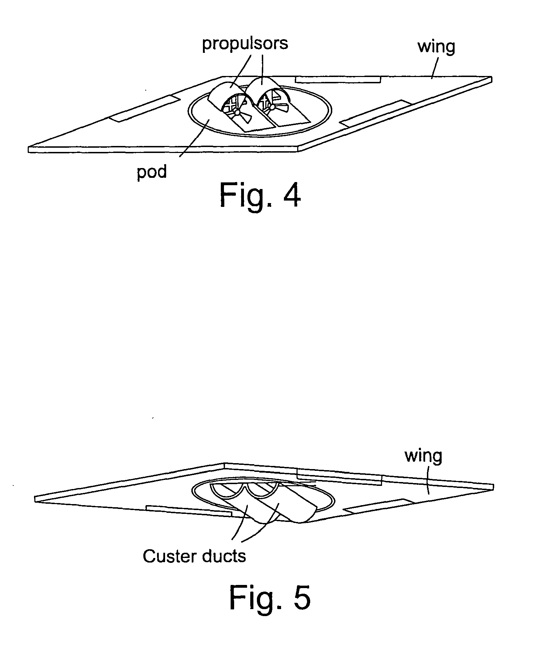

Various types of propulsor may be used, including jet engines. A particularly beneficial arrangement, however, uses propellers and Custer ducts, as shown in Figures 4 to 11. The same principle may be used with any of the arrangements described above with reference to Figures 1 to 3. As shown in Figures 4 and 5, the pod has twin counter-rotating propellers with parallel shafts, housed in closed ducts, connected at the front of the air vehicle to Custer ducts which are open upwardly to the atmosphere. The Custer ducts are axial extensions of a portion of the cylindrical surface of the duct surrounding each propeller. According to the Custer lift phenomenon, as atmospheric air is drawn axially into the propeller from the front, a differential pressure is exerted vertically on the duct, and this provides static lift for the air vehicle.

A further advantage of the duct arrangement is that it shrouds the propeller and provides greater safety and lower noise levels.

Propellers and piston engines are envisaged for low speed, low altitude, unmanned air vehicles. Turbo-props and turbo-fans are intended to be used for higher speed, higher altitude air vehicles. Whilst air vehicles embodying the invention need not necessarily use the Custer ducts, these can be advantageous in order to offset the weight to be carried by the wing, or to allow the carriage of additional payload on the pod. Custer lift can also provide vertical takeoff or short takeoff.

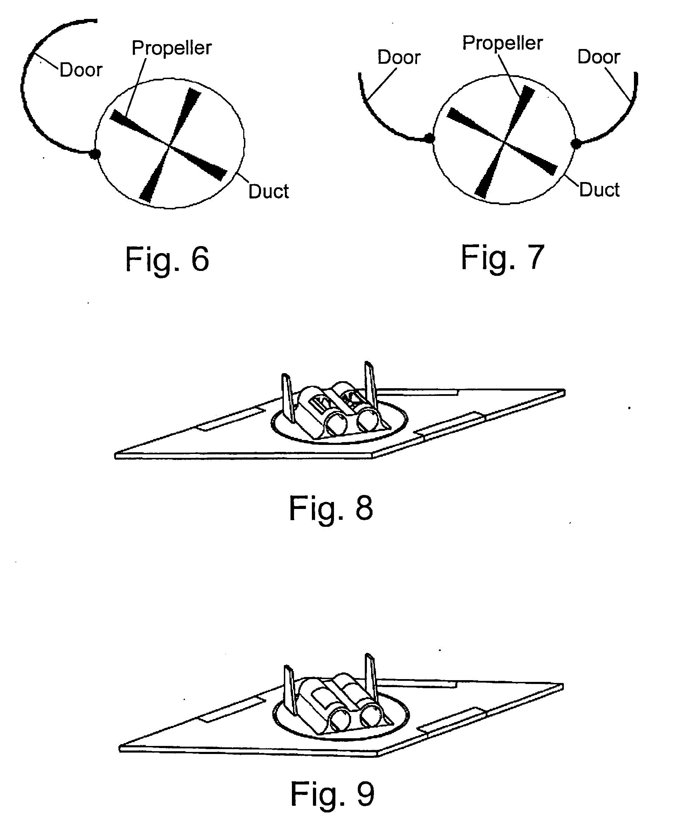

As shown by way of example in Figure 6, the amount of Custer lift is adjustable by selectively closing the channel above the Custer duct, by means of a door which is hinged on an axis parallel to the propeller axis, and acts as a shutter. The door is operated by an actuator, now shown. As shown in Figure 7, the single door could be replaced by a pair of doors on opposite sides. As a further option, the same space can be selectively closed by means of a sliding, part-cylindrical shutter (not shown) whose axis of rotation preferably coincides with the propeller axis i.e. the axis of the Custer duct. However, it is not essential for the propeller axis to coincide with the axis of the Custer duct, and neither is it essential for the shutter or door arrangement to conform to the cylindrical shape of the duct. The shutter actuators are controlled by the flight control system using data signals from position sensors (not shown) for the positions of the shutters.

Figures 8 and 9 show alternative embodiments of the invention to that shown in Figures 4 and 5. Figure 8 shows the ducts open upwardly, and Figure 9 shows the ducts closed. Intermediate positions would of course be possible.

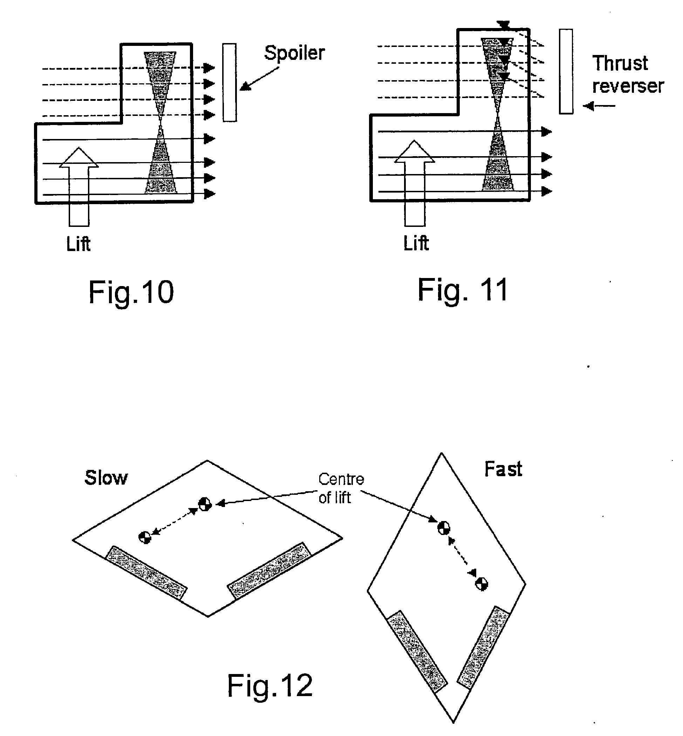

As shown schematically in Figure 10, a thrust spoiler on the top half of the duct may be provided, for reducing thrust in order to slow down an unmanned air vehicle, whilst still allowing air to flow over the Custer duct lifting area, so as to maintain static lift. The thrust spoiler could be for example a hinged plate or vanes. As shown in Figure 11, this could constitute a thrust reverser, which deflects the airflow to the extent that there is no nett thrust. Thrust reversers would cancel the thrust and allow the air vehicle to hover.

As shown in Figure 12, the air vehicle is configured so that the centre of aerodynamic lift is forward of the centre of the wing. Accordingly, as the wing rotates relative to the pod, the centre of aerodynamic lift must change position on the wing. Further, the air vehicle is preferably arranged so that its centre of gravity changes according to the rotational position of the pod relative to the wing. This is preferably achieved by the same mechanism that rotates the wing relative to the pod. In practice, the heaviest components of the air vehicle, such as the fuel tank containing fuel, are borne by the pod and thus by the rotating structure.

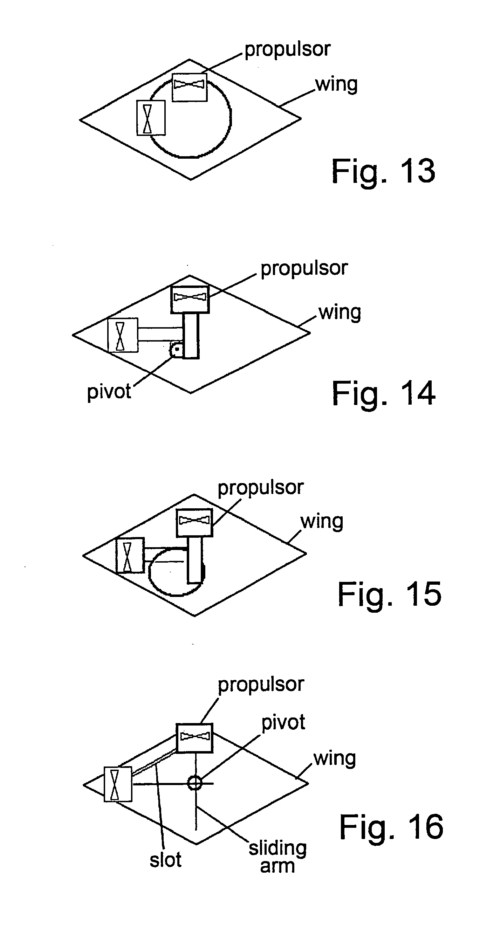

Four alternative arrangements for rotating the pod relative to the wing are shown in Figures 13, 14, 15 and 16. In Figure 13, there is a simple turntable on which the pod is mounted on the wing. The propulsor thus is turned through a right-angle on the turntable. The arrangement shown in Figure 14 has an offset pivot with an arm that carries the heavy systems including the propulsor. The arrangement shown in Figure 15 has an offset turntable, i.e. the centre of the turntable is offset from the centre of the wing, and an arm extends eccentrically from the turntable, to carry the propulsor and other heavy components. Instead of a large turntable, the arrangement shown in Figure 16 comprises a slot along the wing parallel to one of its edges, which acts as a track for sliding the propulsor from one apex to another apex of the wing. As the propulsor slides along its slot or track, it is also rotated through a right-angle by a sliding arm to which it is connected, the sliding arm being constrained to pass through a central pivot. The sliding arm does not take any working load, and simply causes the propulsor to rotate.

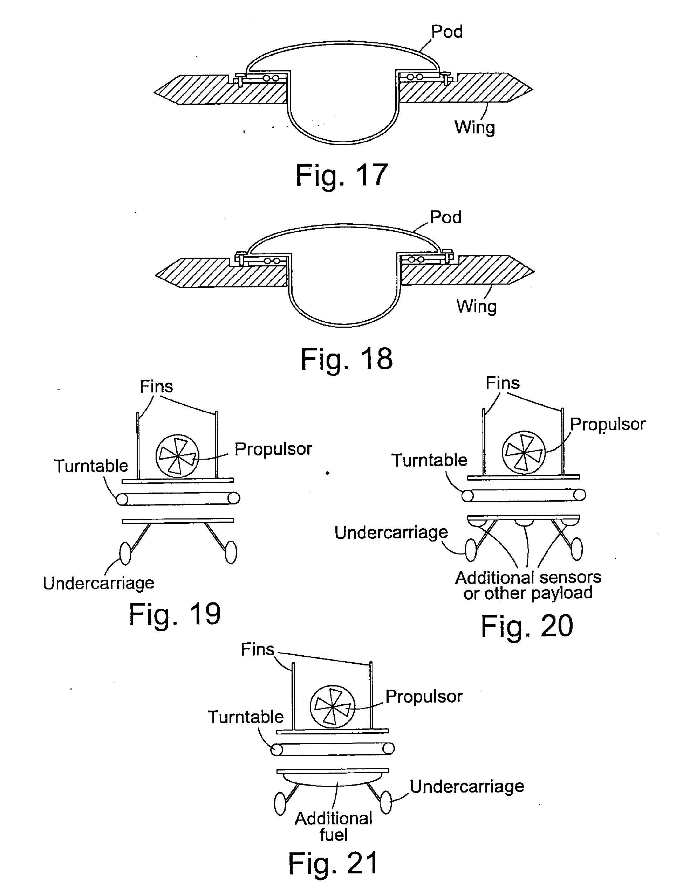

Preferred alternative forms of the turntable are shown in Figures 17 and 18. In the arrangement shown in Figure 17, the turntable is connected permanently to the pod, and is attached removably to the wing, for example with bolts. In the arrangement shown in Figure 18, the pod is permanently connected to the turntable, which is removably connected by bolts to the wing. The pod and the wing can be joined by one or more than one turntable, depending upon the size of the aircraft, respectively above and below the wing. The pod itself can be a single module or can be built up by attaching upper and lower sections to a turntable coupled to the wing. Some of these options are illustrated schematically in Figures 19, 20 and 21. In Figure 19, which is a "basic fit", the propulsor and fins are mounted on a centre body component above the turntable, whilst the undercarriage is coupled to a centre body component below the turntable, whilst the turntable is coupled rotationally to the wing. In the arrangement shown in Figure 20, additional sensors, or other payload items, are added to the lower centre body component. In the arrangement shown in Figure 21, a tank for additional fuel is connected below the lower centre body component.

The propulsor may typically consist of an engine driving a propeller through a power transmission, all these components being connected rigidly to the pod, and for example the turntable.

There is preferably an electronic linkage between the position of the pod relative to the wing, and the positions of the control surfaces, as described above with reference to the flight control system. As an alternative, or in addition, the linkage may be mechanical or electromechanical; for example levers may actuate the elevons in sequence when driven by rods or other mechanical components linked to the turntable.

Disconnection of the pod from the wing, including disconnection of the flexible electrical cable (not shown), and replacement with a different pod is achievable within approximately fifteen minutes, by two engineers with suitable lifting equipment, for a typical unmanned air vehicle with a wing span of four metres.

## Claims

1. An air vehicle comprising only one wing, which is thin and substantially flat, the wing being rotationally asymmetric about an axis at its centre normal to its major surfaces, and a pod removably coupled to the wing for relative rotation about an axis normal to the major surfaces of the wing, the pod bearing a propulsor for the air vehicle.

2. An air vehicle according to Claim 1, in which the pod bears a flight control system.

3. An air vehicle according to Claim 1 or 2, in which the pod bears an under carriage.

4. An air vehicle according to any preceding claim, in which the pod bears a storage for fuel for the propulsor.

5. An air vehicle according to any preceding claim, comprising a turntable removably coupling the pod to the wing for relative rotation.

6. Air vehicle according to Claim 5, in which the turntable is connected permanently to the wing but removably to the pod.

7. An air vehicle according to Claim 5, in which the turntable is connected permanently to the pod but removably to the wing.

8. An air vehicle according to any preceding claim, in which the wing is elongate and the air vehicle is configured to align the wing selectively either widthwise or lengthwise to the direction of thrust of the propulsor, for stable flight respectively at relatively slow and fast speeds.

9. An air vehicle according to Claim 8, in which the wing is substantially diamond-shaped.

10. An air vehicle according to Claim 8 or Claim 9, configured to turn the wing relative to the pod to cause a transition between its widthwise and its lengthwise positions.

11. An air vehicle according to any preceding claim, in which the wing comprises control surfaces on its edge for controlling flight in any relative position of the wing and pod.

12. An air vehicle according to Claim 11, comprising an electrical cable removably connecting the pod to the wing for supplying power to actuators for the control surfaces.

13. An air vehicle according to Claim 11 or Claim 12, comprising a control system configured to activate the control surfaces selectively in accordance with the relative rotational position of the wing and pod.

14. An air vehicle according to any preceding claim, comprising means for driving the pod rotationally relative to the wing between its widthwise and its lengthwise positions.

15. An air vehicle according to any preceding claim, in which the centre of aerodynamic lift of the air vehicle is forward of the centre of the wing, and the rotational coupling of the pod to the wing is configured to cause the centre of gravity of the air vehicle substantially to coincide vertically with the centre of aerodynamic lift of the air vehicle in flight.

16. An air vehicle according to any preceding claim, in which the propulsor comprises an engine-driven propeller, a turbo-prop, a turbo-fan, a jet engine or an electric motor-driven propeller.

17. An air vehicle according to any of Claims 1 to 15, in which the propulsor comprises at least one propeller arranged to draw air through a Custer duct for generating static lift.

18. An air vehicle according to Claim 17, comprising a thrust spoiler or thrust reverser behind the propeller or behind each propeller for adjustably redirecting airflow to reduce forwards thrust.

19. An air vehicle according to any preceding claim, comprising at least a pair of counter-rotating propellers with parallel shafts.

20. An air vehicle according to any preceding claim, comprising at least one fin on the pod for stabilising its direction of flight.

21. An air vehicle comprising only one wing, which is thin and substantially flat, at least one propeller coupled to the wing to drive the air vehicle in a direction generally parallel to the major surfaces of the wing, and a Custer duct in front of the propeller or of each propeller for providing static lift.

22. An air vehicle according to Claim 21, which the wing is elongate and the air vehicle is configured to align the wing selectively either widthwise or lengthwise to the direction of thrust of the propeller, for stable flight respectively at relatively slow and fast speeds.

23. An air vehicle according to Claim 21 or Claim 22, in which the Custer duct is selectively closable to form a duct that is upwardly closed in flight, to cancel the static lift.

24. An air vehicle comprising only one, elongate wing, which is thin and substantially flat, a pod mounted on the wing for rotation through a right-angle between configurations for propulsion respectively lengthwise and widthwise of the wing, the pod bearing a propulsor for the air vehicle and the wing having plural control surfaces on its edge actuable by respective actuators, and a control system configured to activate the control surfaces selectively in accordance with the relative rotational position of the wing and pod.

25. An air vehicle according to Claim 24, in which the control system comprises a mechanical linkage between the pod, the wing and the control surfaces.

26. An air vehicle according to Claim 24, or Claim 25, in which the control system comprises an electronic control circuit responsive to the rotational position of the pod relative to the wing to control the actuators.

27. An air vehicle having a propeller for driving the vehicle forwards, a Custer duct in front of the propeller, and shutter means for adjustably closing an axially-extending region over the Custer duct to selectively reduce the static aerodynamic lift that it generates from the passage of air drawn in by the propeller.

28. An air vehicle according to Claim 27, in which the shutter means comprises a part-cylindrical shutter mounted for rotation about an axis parallel to, or coincident with, the axis of the propeller shaft.

29. An air vehicle according to Claim 28, in which the part-cylindrical shutter has a radius substantially the same as that of the Custer duct.

30. An air vehicle according to Claim 27, in which the shutter means comprises a door hinged for rotation about an axis parallel to, or coincident with, the axis of the propeller shaft.

31. An air vehicle according to any of Claims 27 to 30, comprising an actuator arranged to actuate the shutter means.

32. A propulsor pod for an air vehicle, comprising a propulsor and a turntable configured to couple the pod removably to a wing of the air vehicle for relative rotation.

33. A propulsor pod according to Claim 32, in which the propulsor comprises an engine arranged to drive a propeller unit through a power transmission; the engine, transmission and propeller unit being connected rigidly to the pod.

34. A thin, elongate, substantially flat wing for an air vehicle, comprising a turntable on which a propulsor pod is removably mountable for relative rotation.

35. An air vehicle according to any of Claims 1 to 30, a pod according to Claim 32 or Claim 33 or a wing according to Claim 34, in which the air vehicle is configured for unmanned flight.
